# FASCICULE DE BREVET EUROPEEN

(11) **EP 2 835 903 B1**
(45) Date de publication et mention de la délivrance du brevet: **18.11.2015**
(21) Numéro de dépôt: 14180377.5
(22) Date de dépôt: 08.08.2014
(51) Int. Cl.: H02N 1/08, F03G 7/06, H02N 2/18

(54) **Dispositif de conversion d'énergie thermique en énergie électrique**
Vorrichtung zur Umwandlung von thermischer Energie in elektrische Energie
Device for converting heat energy into electrical energy

(30) Priorité: 09.08.2013 FR 1357913
(43) Date de publication de la demande: 11.02.2015
(73) Titulaire: COMMISSARIAT A L'ENERGIE ATOMIQUE ET AUX ENERGIES ALTERNATIVES, 75015 Paris (FR); STMicroelectronics (Crolles 2) SAS, 38920 Crolles (FR)
(72) Inventeur: Monfray, Stéphane, 38320 Eybens (FR); Arnaud, Arthur, 74330 Poisy (FR); Skotnicki, Thomas, 38920 Crolles-Montfort (FR); Puscasu, Onoriu, 38000 Grenoble (FR); Boisseau, Sébastien, 38130 Echirolles (FR)
(74) Mandataire: Thibon, Laurent

(56) Documents cités:
- JP-A- 2008 106 830
- US-A1- 2011 095 646
- BOISSEAU S ET AL: "Paper;Semi-flexible bimetal-based thermal energy harvesters;Semi-flexible bimetal-based thermal energy harvesters", SMART MATERIALS AND STRUCTURES, IOP PUBLISHING LTD., BRISTOL, GB, vol. 22, no. 2, 25 janvier 2013 (2013-01-25), pages 1-8, XP020237941, ISSN: 0964-1726, DOI: 10.1088/0964-1726/22/2/025021

## Description

### Domaine

La présente demande concerne un dispositif de conversion d'énergie thermique en énergie électrique, ou générateur thermoélectrique.

### Exposé de l'art antérieur

Il a déjà été proposé, dans l'article intitulé "Semi-flexible bimetal-based thermal energy harvesters" de Sébastien Boisseau et al., un dispositif adapté à convertir de l'énergie thermique en énergie électrique à l'aide d'une lame bimétallique incurvée qui change de forme dans des conditions de température variables, en combinaison avec un transducteur capacitif à électret.

Il serait toutefois souhaitable de pouvoir disposer d'un dispositif simple, compact, et d'un faible coût, intégrant plusieurs cellules de conversion qui fonctionnent sur la base de ce principe, et qui puisse assurer une conversion efficace d'énergie thermique en énergie électrique dans une gamme d'environnements différents.

### Résumé

Pour cela, un mode de réalisation prévoit un dispositif de conversion d'énergie thermique en énergie électrique, comportant une pluralité de cellules de conversion disposées dans et sur un premier substrat, chaque cellule comprenant : une lamelle bimétallique incurvée comprenant deux couches superposées de métaux distincts présentant des coefficients de dilatation thermique différents et adaptée à changer de forme lorsque sa température varie; des première et deuxième diodes couplées à ladite lamelle, formées dans une première région semiconductrice du premier substrat ; et un premier transducteur capacitif à électret dont une première électrode est formée par ladite lamelle, dans lequel ladite lamelle est située en regard d'une deuxième région semiconductrice formant une deuxième électrode du transducteur, chaque cellule comportant une couche d'électret entre ladite lamelle et la deuxième région semiconductrice.

Selon un mode de réalisation, dans chaque cellule, l'anode de la première diode et la cathode de la deuxième diode sont couplées électriquement à la lamelle par au moins une première piste conductrice.

Selon un mode de réalisation, la première piste conductrice est réalisée dans au moins un niveau de métal de la lamelle bimétallique.

Selon un mode de réalisation, les cathodes des premières diodes sont couplées à un même premier noeud du dispositif par au moins une deuxième piste conductrice, et les anodes des deuxièmes diodes sont couplées à un même deuxième noeud du dispositif par au moins une troisième piste conductrice.

Selon un mode de réalisation, les deuxième et troisième pistes conductrices sont réalisées dans au moins un niveau de métal de la lamelle bimétallique.

Selon un mode de réalisation, dans chaque cellule, la deuxième région semiconductrice située en regard de la lamelle, et formant une deuxième électrode du transducteur capacitif à électret de la cellule est une région du premier substrat.

Selon un mode de réalisation, le dispositif comporte en outre un deuxième substrat situé du côté des lamelles bimétalliques opposé au premier substrat.

Selon un mode de réalisation, le deuxième substrat comporte des ailettes sur une face opposée aux lamelles bimétalliques.

Selon un mode de réalisation, le deuxième substrat est revêtu d'une couche d'électret du côté d'une face tournée vers les lamelles bimétalliques.

Selon un mode de réalisation, chaque cellule comporte un deuxième transducteur capacitif à électret dont une première électrode est formée par la lamelle et dont une deuxième électrode est formée par une région semiconductrice du deuxième substrat située en regard de la lamelle.

Selon un mode de réalisation, le premier substrat est un substrat SOI comprenant une couche semiconductrice revêtant une couche isolante revêtant un support semiconducteur.

Selon un mode de réalisation, dans chaque cellule, la lamelle bimétallique incurvée est formée au dessus de la couche isolante dans une région du substrat dans laquelle la couche semiconductrice a été retirée.

Selon un mode de réalisation, les premières et deuxièmes diodes sont formées dans la couche semiconductrice.

Un autre mode de réalisation prévoit un procédé de fabrication d'un dispositif de conversion d'énergie thermique en énergie électrique comportant une pluralité de cellules de conversion disposées dans et sur un premier substrat, ce procédé comportant les étapes suivantes : former, dans chaque cellule, des première et deuxième diodes dans une première région semiconductrice du premier substrat ; former, dans chaque cellule, une lamelle bimétallique incurvée couplée aux première et deuxième diodes de la cellule, ladite lamelle comprenant deux couches superposées de métaux distincts présentant des coefficients de dilatation thermique différents et étant adaptée à changer de forme lorsque sa température varie ; et former, dans chaque cellule, une couche d'électret entre ladite lamelle et une deuxième région semiconductrice, ladite lamelle et ladite deuxième région semiconductrice formant des électrodes d'un transducteur capacitif à électret de la cellule (C).

Selon un mode de réalisation, le procédé comporte en outre une étape de formation, dans chaque cellule, d'une couche d'électret entre la lamelle et une deuxième région semiconductrice, la lamelle et la deuxième région semiconductrice formant des électrodes d'un transducteur capacitif à électret de la cellule.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma illustrant le principe de fonctionnement d'un transducteur capacitif à électret ;
la figure 2 est une vue en coupe schématique illustrant un exemple d'un générateur thermoélectrique utilisant une lame bimétallique incurvée couplée à un système de transduction capacitive à électret ;
la figure 3 est un schéma électrique d'un exemple de générateur thermoélectrique ;
les figures 4A à 4C illustrent schématiquement un exemple d'un mode de réalisation d'un générateur thermoélectrique ;
les figures 5A à 5F sont des vues en coupe illustrant schématiquement des étapes d'un exemple de procédé de fabrication d'un générateur thermoélectrique du type décrit en relation avec les figures 4A à 4C ; et
les figures 6, 7 et 8 sont des vues en coupe illustrant des variantes de réalisation du générateur thermoélectrique décrit en relation avec les figures 4A à 4C.

### Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, les termes "approximativement", "sensiblement", "environ" et "de l'ordre de" signifient "à 10 % près" et des références directionnelles telles que surmontant, au-dessus, en dessous, supérieur, inférieur, vertical, horizontal, latéral, etc. s'appliquent à des dispositifs orientés de la façon illustrée dans les vues en coupe des figures correspondantes, étant entendu que, en fonctionnement, les dispositifs peuvent être orientés différemment.

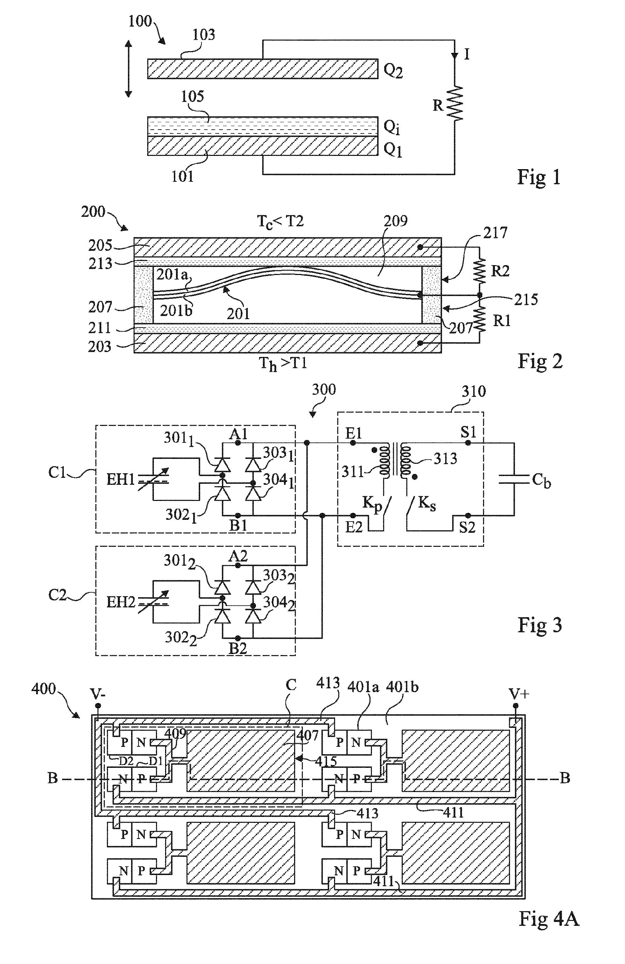

La figure 1 est une vue en coupe illustrant schématiquement un exemple d'un transducteur capacitif à électret 100. Le transducteur 100 comprend une électrode 101, ou électrode fixe, et, en regard de l'électrode 101, une électrode 103 mobile par rapport à l'électrode fixe 101. Dans cet exemple, les électrodes 101 et 103 sont sensiblement planes et parallèles entre elles, et l'électrode 103 est susceptible de se déplacer en translation selon un axe approximativement orthogonal aux électrodes 101 et 103. L'électrode 101 est revêtue d'une feuille ou couche d'électret 105. Par électret, on entend ici un diélectrique électriquement chargé, capable de conserver ses charges ou une partie significative de ses charges pendant une longue période, typiquement de l'ordre de quelques années à quelques dizaines d'années. Dans l'exemple représenté, une charge, représentée schématiquement par une résistance R, est connectée entre les électrodes 101 et 103 du transducteur 100. Le fonctionnement du transducteur 100 est le suivant.

La couche d'électret 105, qui contient une quantité Qᵢ de charges d'une première polarité, par exemple des charges négatives, induit dans les électrodes 101 et 103 une accumulation de charges de polarité inverse, des charges positives dans l'exemple. Si l'on désigne par Q₁ la quantité de charges induites dans l'électrode 101 par la couche 105, et par Q₂ la quantité de charges induites dans l'électrode 103 par la couche 105, l'équilibre Qᵢ = Q₁ + Q₂ est respecté à tout instant. Un déplacement de l'électrode 103 par rapport à l'électrode 101 entraine une réorganisation des charges induites dans les électrodes 101 et 103 par la couche d'électret 105. En particulier, si l'électrode 103 s'éloigne de l'électrode 101, la quantité Q₂ de charges induites dans l'électrode 103 diminue et la quantité Q₁ de charges induites dans l'électrode 101 augmente. A l'inverse, si l'électrode 103 se rapproche de l'électrode 101, la quantité Q₂ de charges induites dans l'électrode 103 augmente et la quantité Q₁ de charges induites dans l'électrode 101 diminue. Il en résulte qu'un courant I circule à travers la charge R. Le mouvement relatif de l'électrode 103 par rapport à l'électrode 101 est ainsi converti en électricité.

La figure 2 est une vue en coupe schématique illustrant un exemple d'un dispositif 200 de conversion d'énergie thermique en énergie électrique comprenant une lame bimétallique incurvée couplée à un système de transduction capacitive à électret.

Le dispositif 200 comprend une lame bimétallique incurvée 201, constituée de deux couches superposées 201a, 201b de métaux distincts ayant des coefficients de dilatation thermique différents. La lame 201 est adaptée à changer de forme lorsque sa température varie. A titre d'exemple, la lame 201 est adaptée à alterner entre une première forme en arche (dans l'orientation de la figure 2), telle que représentée en figure 2, lorsque sa température est supérieure à un seuil T1, et une deuxième forme (non représentée) en arche inversée (dans l'orientation de la figure 2) lorsque sa température est inférieure à un seuil T2 inférieur au seuil T1.

Le dispositif 200 comprend en outre deux plaques ou feuilles métalliques 203 et 205 approximativement parallèles et en regard l'une de l'autre. Dans l'orientation de la figure 2, les plaques 203 et 205 sont approximativement horizontales, et la plaque 205 est au dessus de la plaque 203. Des parois latérales 207 approximativement verticales, en un matériau électriquement isolant et de préférence thermiquement isolant, sont disposées entre les plaques 203 et 205. Les plaques 203 et 205 et les parois 207 délimitent une cavité 209. Du côté de leurs faces orientées vers l'intérieur de la cavité 209, les plaques métalliques 203 et 205 sont revêtues respectivement d'une couche d'électret 211 et d'une couche d'électret 213. Les couches d'électret 211 et 213 sont par exemple en TEFLON chargé.

La lame bimétallique 201 est disposée à l'intérieur de la cavité 209. Dans cet exemple, la lame 201 est suspendue par ses extrémités entre les plaques métalliques 203 et 205, par exemple environ à mi-hauteur des parois 207.

La plaque métallique 203, la couche d'électret 211 et la lame bimétallique 201 forment un premier transducteur capacitif à électret 215. La plaque 203 et la lame 201 correspondent par exemple respectivement à l'électrode fixe et à l'électrode mobile d'un transducteur du type décrit en relation avec la figure 1. Dans l'exemple représenté, une charge, représentée schématiquement par une résistance R1, est connectée entre les électrodes 203 et 201 du transducteur 215. En outre, la plaque métallique 205, la couche d'électret 213 et la lame bimétallique 201 forment un deuxième transducteur capacitif à électret 217. La plaque 205 et la lame 201 correspondent par exemple respectivement à l'électrode fixe et à l'électrode mobile d'un transducteur du type décrit en relation avec la figure 1. Dans l'exemple représenté, une charge, représentée schématiquement par une résistance R2, est connectée entre les électrodes 205 et 201 du transducteur 217.

En fonctionnement, la plaque métallique 203 est destinée à être en contact avec une source chaude à une température Tₕ supérieure au seuil T1, et la plaque métallique 205 est destinée à être en contact avec une source froide à une température T_{C} inférieure au seuil T2. La source chaude peut être une surface d'un composant électronique, ou toute autre source de chaleur disponible dans l'environnement, par exemple un pot d'échappement de voiture, une canalisation, une paroi d'une machine, etc. La source froide peut être un radiateur à ailettes, ou directement l'air ambiant, ou toute autre source dont la température est inférieure à celle de la source chaude.

Lorsque la lame 201 est dans sa forme en arche inversée, la lame 201 est en contact ou au voisinage immédiat de la couche d'électret 211. De la chaleur produite par la source chaude est alors transmise à la lame 201 par l'intermédiaire de la plaque 203 et de la couche 211. Lorsque la température de la lame 201 atteint le seuil T1, la lame 201 prend sa forme en arche. La lame 201 s'éloigne donc de la source chaude et vient en contact ou au voisinage immédiat de la couche d'électret 213. La lame 201 refroidit alors du fait de sa proximité de la source froide. Lorsque la température de la lame 201 atteint le seuil T2, la lame reprend sa forme en arche inversée, et le cycle recommence. De l'énergie thermique produite par la source chaude est ainsi convertie en oscillations mécaniques de la lame 201. Lors des oscillations, l'électrode mobile 201, commune aux transducteurs 215 et 217, s'éloigne et se rapproche alternativement des électrodes fixes 203 et 205, ce qui provoque l'apparition de courants électriques dans les charges R1 et R2. De l'énergie mécanique produite par les oscillations de la lame 201 est ainsi convertie en électricité.

Dans certaines applications, il serait souhaitable de pouvoir disposer d'un générateur thermoélectrique simple et compact, et d'un faible coût, intégrant plusieurs cellules de conversion de petites dimensions qui fonctionnent sur la base d'un principe de conversion identique ou similaire à celui décrit en relation avec la figure 2.

Une difficulté est liée au fait qu'en pratique, pour pouvoir exploiter dans des applications conventionnelles l'énergie électrique produite par un générateur du type décrit en relation avec la figure 2, il convient que le générateur comporte un circuit (non visible sur la figure 2) de conversion des signaux électriques fournis par chaque transducteur capacitif à électret en énergie exploitable pour alimenter des charges conventionnelles. Des exemples de tels circuits de conversion sont décrits dans l'article "Semi-flexible bimetal-based thermal energy harvesters" susmentionné, qui est incorporé par référence dans la présente description dans la mesure autorisée par la loi. Lorsque le générateur comprend plusieurs cellules de conversion fonctionnant en parallèle, le circuit de conversion des signaux électriques fournis par les transducteurs capacitifs à électret peut s'avérer relativement complexe et encombrant.

La figure 3 est un schéma électrique d'un exemple d'un générateur thermoélectrique 300 utilisant plusieurs lames bimétalliques incurvées couplées à des transducteurs capacitifs à électret. La figure 3 illustre plus particulièrement un exemple de réalisation d'un circuit de conversion de l'énergie électrique fournie par les transducteurs capacitifs à électret, en vue de son utilisation pour alimenter une charge.

Le générateur 300 comprend plusieurs cellules de conversion thermoélectrique, deux cellules C1 et C2 dans l'exemple représenté, comportant chacune un élément de transduction thermoélectrique, respectivement EH1 dans la cellule C1 et EH2 dans la cellule C2. Dans chaque cellule C1, C2, l'élément de transduction thermoélectrique EH1, EH2 est par exemple une variante de réalisation du dispositif de la figure 2 dans laquelle la lame bimétallique 201 n'est couplée qu'à un seul transducteur capacitif à électret, c'est-à-dire dans laquelle une seule des deux plaques métalliques fixes 203, 205 est revêtue d'une couche d'électret. Chaque cellule C1, C2 comprend en outre un circuit de redressement des signaux électriques fournis par l'élément de transduction thermoélectrique EH1, EH2 de la cellule. Dans l'exemple représenté, dans chaque cellule C1, C2, le circuit de redressement est constitué par un pont de diodes. Dans la cellule C1, le circuit de redressement comprend : une première diode 301₁ connectée en direct entre une première électrode - l'électrode mobile dans cet exemple - de l'élément EH1 et un noeud A1 ; une deuxième diode 302₁ connectée en direct entre un noeud B1 et l'anode de la diode 301₁ ; une troisième diode 303₁ connectée en direct entre une deuxième électrode - l'électrode fixe dans cet exemple - de l'élément EH1 et le noeud A1 ; et une quatrième diode 304₁ connectée en direct entre le noeud B1 et l'anode de la diode 303₁. Dans la cellule C2, le circuit de redressement comprend : une première diode 301₂ connectée en direct entre une première électrode-l'électrode mobile dans cet exemple - de l'élément EH1 et un noeud A2 ; une deuxième diode 302₂ connectée en direct entre un noeud B2 et l'anode de la diode 301₂ ; une troisième diode 303₂ connectée en direct entre une deuxième électrode - l'électrode fixe dans cet exemple - de l'élément EH1 et le noeud A2 ; et une quatrième diode 304₂ connectée en direct entre le noeud B1 et l'anode de la diode 303₂. Dans la cellule C1, respectivement C2, les noeuds A1 et B1, respectivement A2 et B2, définissent des noeuds de sortie de la cellule et fournissent, en fonctionnement, des signaux électriques redressés.

Dans l'exemple de la figure 3, les sorties des différentes cellules sont couplées, en parallèle, en entrée d'un unique convertisseur de puissance 310. Dans cet exemple, le convertisseur 310 comprend un transformateur DC-DC comportant un premier enroulement 311, ou enroulement primaire, couplé en série avec un interrupteur Kp entre des noeuds d'entrée E1 et E2 du convertisseur 310, et un second enroulement 313, ou enroulement secondaire, couplé en série avec un interrupteur K_{S} entre des noeuds de sortie S1 et S2 du convertisseur 310. Les enroulements 311 et 313 peuvent être couplés magnétiquement et ont, dans cet exemple, des sens d'enroulement opposés. Dans cet exemple, les noeuds de sortie A1, A2 des cellules C1, C2 sont connectés au noeud d'entrée E1 du convertisseur 310, et les noeuds de sortie B1, B2 des cellules C1, C2 sont connectés au noeud d'entrée E2 du convertisseur 310. Un circuit de commande non représenté permet de contrôler les interrupteurs Kp et K_{S} pour transférer de l'énergie électrique de l'entrée vers la sortie du convertisseur 310. Un élément C_{b} de stockage de l'énergie électrique fournie par le convertisseur 310, par exemple une batterie ou un condensateur, peut être couplé aux bornes de sortie S1, S2 du convertisseur 310.

Les circuits de redressement des cellules de conversion thermoélectrique C1, C2, et le convertisseur de puissance 310 forment un circuit de conversion de l'énergie électrique produite par les éléments de transduction thermoélectrique EH1, EH2. Ce circuit pourra aisément être adapté à un générateur comprenant un nombre de cellules de conversion thermoélectrique différent de deux.

Pour réaliser un générateur thermoélectrique comportant un nombre élevé de cellules de conversion thermoélectrique couplées en parallèle, un problème qui se pose est celui de l'encombrement des diodes prévues dans chaque cellule pour redresser les signaux fournis par l'élément de transduction thermoélectrique de la cellule, et du nombre élevé de fils à prévoir pour connecter, dans chaque cellule, l'élément de transduction thermoélectrique aux diodes, et pour connecter entre elles les diodes des différentes cellules. Il en résulte une structure encombrante et complexe. En outre, les étapes de fabrication des différentes cellules de conversion et d'assemblage de ces cellules en un générateur sont relativement longues et complexes.

Selon un aspect d'un mode de réalisation, on prévoit un générateur thermoélectrique comportant une pluralité de cellules de conversion thermoélectrique intégrées dans et sur un même substrat, chaque cellule comportant une lamelle bimétallique et au moins deux diodes formées dans une région semiconductrice du substrat.

Comme cela ressortira plus clairement de la description qui suit, ceci permet d'obtenir un dispositif simple et compact, dont la réalisation est relativement aisée et peu onéreuse dans la mesure où elle utilise essentiellement des méthodes et/ou des équipements éprouvés de fabrication de composants électroniques dans et sur des substrats comportant des régions semiconductrices.

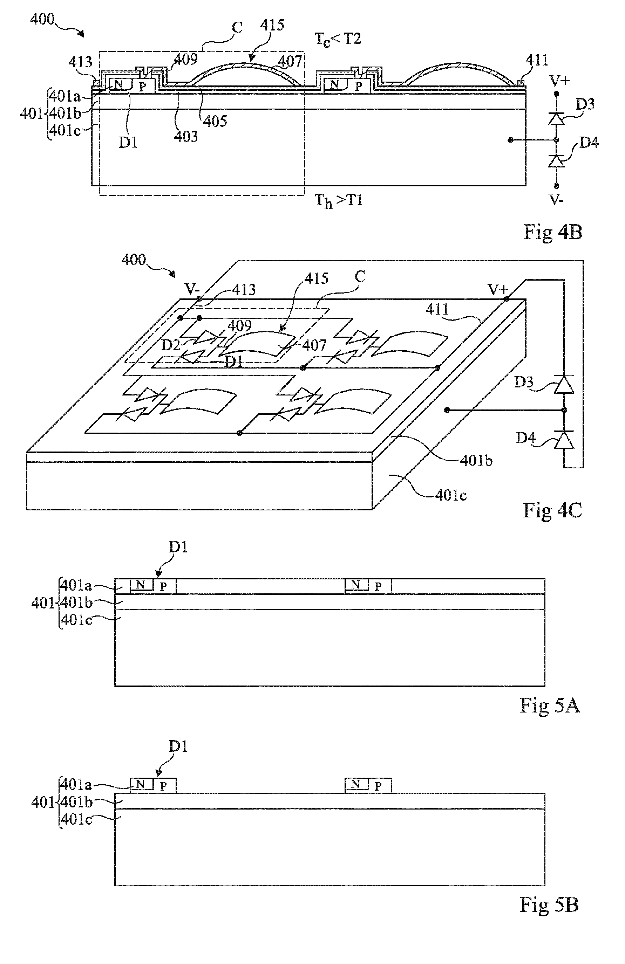

Les figures 4A à 4C illustrent un exemple d'un mode de réalisation d'un générateur thermoélectrique 400. La figure 4A est une vue de dessus du générateur 400, la figure 4B est une vue en coupe du générateur 400 selon le trait B-B de la figure 4A, et la figure 4C est une vue en perspective schématique du générateur 400.

Le générateur 400 comprend une pluralité de cellules de conversion thermoélectrique C identiques ou similaires, formées dans et sur un substrat 401. Sur les figures 4A à 4C, quatre cellules ont été représentées. Toutefois, en pratique, le générateur 400 peut comprendre un nombre différent de cellules, par exemple un nombre nettement plus élevé, par exemple environ 10 à 1000000 cellules sur un substrat approximativement circulaire d'environ 100 à 450 mm de diamètre. Dans cet exemple, les cellules sont disposées en matrice. Les modes de réalisation décrits ne se limitent toutefois pas à cette disposition particulière.

Dans l'exemple des figures 4A à 4C, le substrat 401 est un substrat de type semiconducteur sur isolant ou substrat SOI, comportant une couche semiconductrice 401a, par exemple en silicium, revêtant une couche isolante 401b, par exemple en oxyde de silicium, la couche 401b revêtant elle-même un support semiconducteur 401c, par exemple en silicium. A titre d'exemple, le support 401c a une épaisseur de l'ordre de 50 à 1000 µm, la couche isolante 401b a une épaisseur de l'ordre de 0,01 à 5 µm, et la couche semiconductrice 401a a une épaisseur de l'ordre de 0,01 à 5 µm.

Chaque cellule de conversion thermoélectrique C comporte, dans cet exemple, deux diodes D1 et D2 formées dans une région de la couche semiconductrice 401a. Au voisinage des diodes D1 et D2, chaque cellule C comprend une portion du substrat 401 dans laquelle la couche 401a a été retirée. Dans cet exemple, une couche isolante 403, par exemple en nitrure de silicium (Si₃N₄), revêt la surface supérieure des portions de la couche 401b laissées libres par le retrait de la couche 401a, ainsi que la surface supérieure et les surfaces latérales laissées libres par le retrait de la couche 401a, des régions de la couche 401a dans lesquelles sont formées les diodes D1 et D2. La couche 403 est elle-même revêtue par une couche d'électret 405, par exemple en TEFLON chargé ou en parylène chargé. A titre de variante, la couche 405 peut être en hexaméthyldisiloxane, généralement désigné dans la technique par le sigle HMDS. On notera que le HDMS n'a pas, intrinsèquement, des propriétés d'électret, mais les essais réalisés ont montré que, après dépôt d'une couche 405 en HMDS, l'empilement oxyde-nitrure-HMDS des couches 401b-403-405 présente des propriétés d'électret c'est-à-dire qu'il peut conserver des charges électriques pendant une longue période. Plus généralement, la couche d'électret 405 peut être constituée de tout matériau présentant des propriétés d'électret seul ou en combinaison avec les couches 401b et 403. A titre d'exemple, la couche 403 a une épaisseur d'environ 10 à 500 nm, et la couche 405 a une épaisseur d'environ 1 nm à 2 µm. Les couches 403 et 405 comportent des ouvertures permettant de prendre des contacts électriques sur les régions d'anode et de cathode des diodes D1 et D2. Par souci de simplification des figures, les couches 403 et 405 ne sont pas représentées sur les figures 4A et 4C. En outre, sur la figure 4C, la couche semiconductrice 401a n'est pas représentée et les diodes D1 et D2 sont représentées de façon schématique par des symboles électroniques.

Chaque cellule de conversion C comporte une lamelle bimétallique incurvée 407 située au dessus de la portion de substrat 401 voisine des diodes D1 et D2 dans laquelle la couche semiconductrice 401a a été retirée. Dans l'exemple représenté (voir figure 4B), la lamelle bimétallique 407 repose sur la couche d'électret 405. La lamelle 407 comprend deux couches superposées de métaux distincts ayant des coefficients de dilatation thermique différents. Toutefois, par souci de simplification des figures, les deux couches métalliques ne sont pas différenciées sur les figures. La lamelle 407 est adaptée à changer de forme lorsque sa température varie. A titre d'exemple, la lamelle 407 est adaptée à alterner entre une première forme en arche (dans l'orientation de la figure 4B), telle que représentée sur les figures 4B et 4C, lorsque sa température est supérieure à un seuil T1, et une deuxième forme (non représentée) en arche inversée (dans l'orientation de la figure 4B) lorsque sa température est inférieure à un seuil T2 inférieur au seuil T1. Le métal de chaque couche de la lamelle 407 est par exemple choisi parmi le nitrure de titane, l'aluminium, le cuivre, le fer, l'or, le tungstène, le platine, un alliage fer-nickel, ou un alliage de l'un quelconque de ces métaux. Chacune des deux couches métalliques de la lamelle 407 a par exemple une épaisseur d'environ 0,1 à 10 µm. A titre d'exemple, en vue de dessus, la lamelle 407 est approximativement rectangulaire. La lamelle 407 a par exemple une largeur de l'ordre de 1 à 500 µm et une longueur de l'ordre de 10 à 5000 µm. Les modes de réalisation décrits ne se limitent toutefois pas à cette forme particulière et à ces dimensions. On notera que les faces de la lamelle 407 peuvent être revêtues d'une couche isolante, non représentée, par exemple en parylène, en TEFLON ou en HMDS, de façon à éviter un contact direct entre le métal de la lamelle et l'électret, ce qui pourrait endommager l'électret et notamment le décharger. A titre d'exemple, ce revêtement isolant peut avoir une épaisseur de l'ordre de 1 nm à 5 µm.

Dans chaque cellule C, la lamelle bimétallique 407 est couplée électriquement, par exemple connectée, à la région d'anode de la diode D1 et à la région de cathode de la diode D2 par au moins une piste métallique 409. La piste 409 est de préférence formée dans l'un des niveaux de métal de la lamelle 407 ou dans les deux niveaux de métal de la lamelle 407. Ceci permet de simplifier la structure du générateur 400 et de rendre sa réalisation plus facile en économisant des niveaux de métal.

Dans cet exemple, les régions de cathode des diodes D1 des différentes cellules C du générateur 400 sont couplées électriquement, par exemple connectées, à un même noeud V₊ par au moins une piste métallique 411, et les régions d'anode des diodes D2 des différentes cellules C du générateur 400 sont couplées électriquement, par exemple connectées, à un même noeud V₋ par au moins une piste métallique 413. Les pistes 411, 413 sont de préférence formées dans l'un des niveaux de métal des lamelles 407 ou dans les deux niveaux de métal des lamelles 407.

Comme cela apparaît sur les figures 4B et 4C, dans cet exemple, le générateur 400 comprend en outre deux diodes D3 et D4 connectées en série entre les noeuds V₋ et V₊, l'anode de la diode D4 étant couplée électriquement, par exemple connectée, au noeud V₋ et la cathode de la diode D3 étant couplée électriquement, par exemple connectée, au noeud V₊. Les régions d'anode de la diode D3 et de cathode de la diode D4 (point milieu de l'association en série des diodes D3 et D4) sont couplées électriquement, par exemple connectées, au support semiconducteur 401c du substrat 401.

A titre d'exemple, les diodes D3 et D4 peuvent être formées dans une région de la couche semiconductrice 401a du substrat 401. Dans ce cas, pour connecter les régions d'anode de la diode D3 et de cathode de la diode D4 au support 401c, on peut prévoir de réaliser une ouverture (non représentée) dans la couche isolante 401b pour accéder à la face supérieure du support 401c, et de former au moins une piste conductrice reliant la face supérieure du support 401c à l'anode de la diode D3 et à la cathode de la diode D4. Cette piste peut être formée dans l'un des niveaux de métal des lamelles 407 ou dans les deux niveaux de métal des lamelles 407.

A titre de variante, les diodes D3 et D4 peuvent être des diodes discrètes. Dans ce cas, pour connecter l'anode de la diode D3 et la cathode de la diode D4 au support 401c, on peut prévoir de réaliser une métallisation de contact (non représentée) soit sur la face supérieure du support 401c, dans une ouverture (non représentée) traversant la couche isolante 401b, soit sur la face inférieure du support 401c. L'anode de la diode D3 et la cathode de la diode D4 peuvent être connectées à cette métallisation par des fils conducteurs.

Dans chaque cellule de conversion thermoélectrique C du générateur 400, la portion du support 401c située sous la lamelle bimétallique 407, la couche d'électret 405 et la lamelle bimétallique 407 forment un transducteur capacitif à électret 415. Le support 401c et la lamelle 407 correspondent par exemple respectivement à l'électrode fixe et à l'électrode mobile d'un transducteur du type décrit en relation avec la figure 1.

En fonctionnement, la face inférieure ou face arrière du support 401c est destinée à être en contact avec une source chaude à une température Tₕ supérieure au seuil T1, et la face supérieure du générateur 400 est destinée à être en contact avec une source froide à une température T_{C} inférieure au seuil T2, par exemple l'air ambiant.

Dans chaque cellule C, de l'énergie thermique produite par la source chaude est convertie en oscillations mécaniques de la lamelle 407 de la cellule, et de l'énergie mécanique produite par les oscillations de la lamelle est convertie en énergie électrique par le transducteur 415 de la cellule, selon un principe similaire à celui décrit en relation avec la figure 2. Dans chaque cellule, les diodes D1 et D2 de la cellule forment, avec les diodes D3 et D4 communes à toutes les cellules du générateur, un pont de diodes adapté à redresser les signaux électriques produits par le transducteur 415 de la cellule.

Le générateur 400 peut en outre comprendre un circuit non représenté de conversion des signaux électriques redressés fournis entre les noeuds V₋ et V₊. A titre d'exemple, un circuit de conversion tel que le circuit 310 de la figure 3 peut être connecté, par ses noeuds d'entrée E1, E2, aux noeuds de sortie V₊, V₋ du circuit de redressement du générateur 400. Plus généralement, tout autre circuit adapté à convertir les signaux électrique redressés fournis entre les noeuds V₋ et V₊ en une énergie électrique exploitable pour alimenter une charge peut être utilisé.

Les figures 5A à 5F sont des vues en coupe illustrant schématiquement des étapes d'un exemple de procédé de fabrication d'un générateur thermoélectrique du type décrit en relation avec les figures 4A à 4C.

La figure 5A illustre une étape de formation des diodes D1 et D2 des cellules C dans la couche semiconductrice 401a du substrat 401. Pour cela, des éléments dopants de type N et de type P peuvent être implantés ou diffusés dans la couche 401a depuis sa face supérieure. Des masques non représentés peuvent être utilisés pour délimiter les régions d'implantation.

La figure 5B illustre une étape de retrait, dans chaque cellule C, d'au moins une portion de la couche 401a dans une région du substrat 401 voisine des diodes D1 et D2 de la cellule. A titre d'exemple, la couche 401a peut être retirée partout sauf là où des diodes D1, D2 ont été formées. On notera qu'une portion de couche 401a peut être retirée entre la diode D1 et la diode D2 de chaque cellule, ce qui permet d'isoler les diodes les unes des autres. Le retrait de la couche 401a peut être effectué par gravure. Un masque non représenté peut être utilisé pour délimiter les zones de la couche 401a à graver.

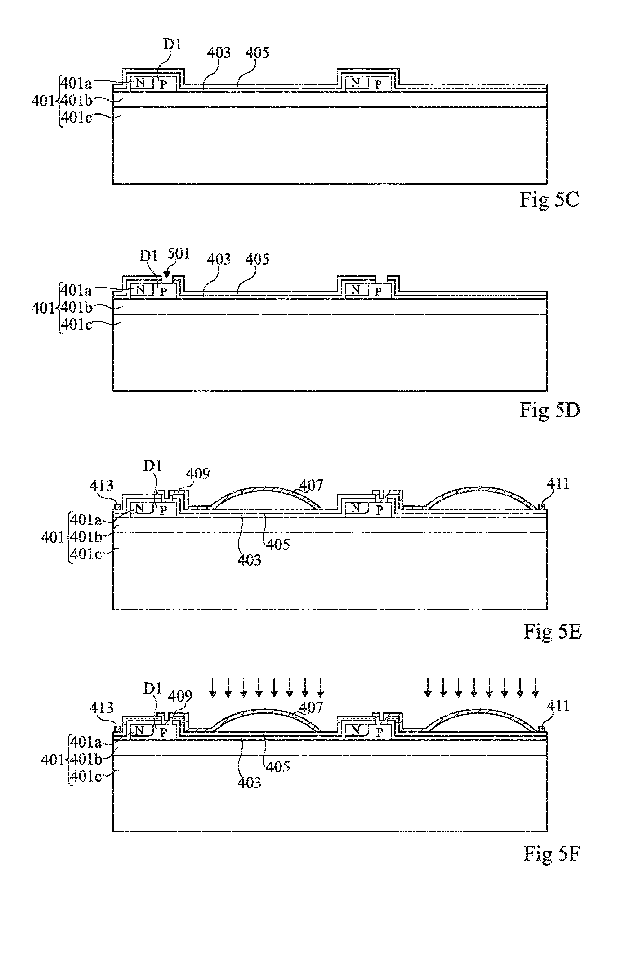

La figure 5C illustre une étape postérieure à l'étape de gravure de la figure 5B, de dépôt de la couche isolante 403 sur la surface supérieure du substrat 401, c'est-à-dire sur les surfaces supérieures de la couche 401b rendues libres par la gravure de la couche 401a, et sur les faces latérales et supérieures des régions non gravées de la couche 401a. La figure 5C illustre en outre le dépôt, sur la surface supérieure de la couche 403, d'une couche 405 en un matériau susceptible de servir d'électret, seul ou en combinaison avec les couches 401b et 403, par exemple du TEFLON, du parylène ou du HMDS.

La figure 5D illustre une étape de formation d'ouvertures 501 dans l'empilement formé par les couches 403 et 405, en regard de régions de prise de contact sur les régions d'anode et de cathode des diodes D1 et D2 des cellules C. Afin d'améliorer le contact électrique, une étape optionnelle de siliciuration du silicium exposé peut être prévue, afin de former, par exemple, une couche de siliciure de Nickel sur les régions d'anode et de cathode des diodes D1 et D2.

La figure 5E illustre une étape de formation, dans chaque cellule C, d'une lamelle bimétallique incurvée 407, au dessus de la couche 405, dans une région du substrat dans laquelle la couche 401a a été retirée au voisinage des diodes D1 et D2. Les lamelles 407 peuvent par exemple être formées par un procédé du type décrit dans la demande de brevet français intitulée "Plaque incurvée et son procédé de fabrication" déposée le 2 avril 2012 sous le numéro 12/52997, et dans la demande de brevet US correspondante déposée le 28 mars 2013 sous le numéro 13/852676. Ces deux demandes sont incorporées par référence dans la présente description dans la mesure autorisée par la loi.

A titre d'exemple, des pavés carrés ou rectangulaires (non représentés) d'un matériau fusible tel que de la résine sont formés sur la couche 405 là où l'on souhaite former des lamelles 407. Une étape de photolithographie peut être prévue pour former ces pavés. Après la formation des pavés, un recuit peut être prévu pour transformer les pavés en monticules arrondis (non représentés), de forme plus ou moins sphérique selon les conditions du recuit. Après le recuit, deux couches de métaux distincts ayant des coefficients de dilatation thermiques différents peuvent être successivement déposées sur les monticules arrondis pour former les lamelles incurvées 407. Les dépôts métalliques peuvent par exemple être réalisés par un procédé de dépôt physique en phase vapeur. Après le dépôt des couches métalliques, une étape de gravure peut être prévue pour délimiter les lamelles 407, et, le cas échéant, les pistes conductrices 409, 411, 413. Les monticules du matériau fusible utilisé pour conformer les lamelles peuvent ensuite être retirés, par exemple par gravure humide.

Après le retrait des monticules du matériau fusible, les faces supérieures et inférieures des lamelles 407 peuvent être revêtues d'une couche isolante visant à éviter un contact direct entre le métal de la lamelle et l'électret du transducteur. Cette couche est par exemple formée par dépôt conforme d'un matériau isolant sur toute la surface du dispositif, par exemple un polymère tel que le parylène, le TEFLON ou le HMDS.

La figure 5F illustre une étape au cours de laquelle la couche 405 est chargée électriquement de façon à acquérir des propriétés d'électret. Dans cet exemple, la couche 405 est pour cela soumise à une décharge Corona, par exemple sous une tension de pointe de l'ordre de 10000 volts pendant environ 1 heure. Dans l'exemple représenté, la décharge Corona est effectuée à travers les lamelles bimétalliques 407. Les modes de réalisation décrits ne se limitent toutefois pas à ce cas particulier. On pourra par exemple prévoir de mettre en oeuvre la décharge Corona avant la réalisation des lamelles 407. En outre, on pourra prévoir de charger électriquement la couche 405 par d'autres moyens que par une décharge Corona. On notera que dans l'exemple représenté, un avantage lié à l'utilisation d'un substrat SOI est que, lors de la décharge Corona, des charges sont stockées non seulement dans la couche 405, mais aussi dans les couches diélectriques sous-jacentes, et notamment dans la couche 401b du substrat qui peut contenir une quantité relativement importante de charges. En l'absence de la couche supérieure 405, la couche 401b ne pourrait pas retenir les charges électriques pendant une période suffisamment longue pour servir d'électret. Toutefois, la présence de la couche supérieure 405, par exemple en TEFLON ou en parylène, a pour effet d'empêcher la décharge de la couche 401b, d'où il résulte que la couche 401b joue aussi le rôle d'électret dans le générateur thermoélectrique des figures 4A à 4C. Pour la même raison, la couche 403 est aussi susceptible de jouer le rôle d'électret dans le générateur des figures 4A à 4C.

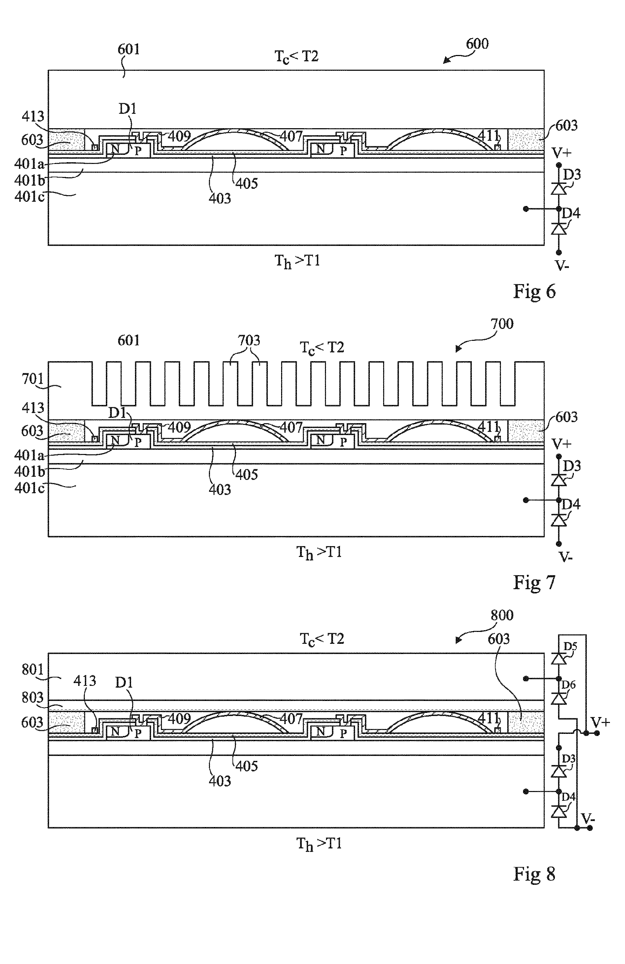

La figure 6 est une vue en coupe illustrant une variante de réalisation d'un générateur thermoélectrique. Le générateur thermoélectrique 600 de la figure 6 comprend tous les éléments du générateur 400 des figures 4A à 4C. Ces éléments ne seront pas décrits à nouveau ci-après. Le générateur 600 comprend de plus un deuxième substrat 601 qui encapsule le générateur du côté de sa surface supérieure. Le substrat 601 peut être un substrat semiconducteur, par exemple un substrat de silicium massif, ou un substrat d'un autre type. Le substrat 601 est disposé au dessus de la face supérieure du substrat 401, approximativement parallèlement au substrat 401, et est séparé de la face supérieure du substrat 401 par un ou plusieurs espaceurs 603, par exemple en résine, de façon à laisser les lamelles 407 libres de se déformer lorsque leur température varie.

En fonctionnement, la face inférieure ou face arrière du support 401c est destinée à être en contact avec une source chaude à une température Tₕ supérieure au seuil T1, et la face supérieure du substrat 601 est destinée à être en contact avec une source froide à une température T_{C} inférieure au seuil T2.

Un avantage du générateur 600 de la figure 6 est que le substrat 601 permet de protéger les lamelles bimétalliques du générateur. De plus, le substrat 601 permet une transmission plus homogène de la température de la source froide vers les lamelles bimétalliques 407.

La figure 7 est une vue en coupe illustrant une autre variante de réalisation d'un générateur thermoélectrique. Le générateur thermoélectrique 700 de la figure 7 comprend, comme dans l'exemple de la figure 6, un substrat 701 formant un capot de protection des lamelles bimétalliques 407 du côté de la surface supérieure du générateur. Le générateur 700 de la figure 7 diffère du générateur 600 de la figure 6 en ce que, dans le générateur 700, la face supérieure du substrat 701, c'est-à-dire la face du substrat 701 opposée aux lamelles 407, comporte des ailettes 703. Les ailettes 703 peuvent être formées dans le même matériau que le substrat. Les ailettes 703 permettent d'améliorer le refroidissement des lamelles bimétalliques 407 par la source froide.

La figure 8 est une vue en coupe illustrant une autre variante de réalisation d'un générateur thermoélectrique. Le générateur thermoélectrique 800 de la figure 8 comprend, comme dans l'exemple de la figure 6, un substrat 801 formant un capot de protection des lamelles 407 du côté de la face supérieure du générateur. Dans le générateur 800, le substrat 801 est un substrat semiconducteur, par exemple un substrat de silicium massif. Le générateur 800 de la figure 8 diffère du générateur 600 de la figure 6 en ce que, dans le générateur 800, la face inférieure du substrat 801, c'est-à-dire la face du substrat 801 tournée vers les lamelles 407, est revêtue d'une couche d'électret 803, par exemple une couche de TEFLON ou de parylène électriquement chargée, ou un empilement, électriquement chargé, d'une ou plusieurs couches diélectriques, par exemple SiO₂/Si₃N₄, et d'une couche susceptible de transformer l'empilement diélectrique en électret, par exemple une couche de TEFLON, de parylène ou de HMDS. Le générateur 800 comprend en outre deux diodes D5 et D6 en série entre les noeuds V₋ et V₊, l'anode de la diode D6 étant couplée, par exemple connectée, au noeud V₋ et la cathode de la diode D5 étant couplée, par exemple connectée, au noeud V₊. L'anode de la diode D5 et la cathode de la diode D6 (point milieu de l'association en série des diodes D5 et D6) sont couplées, par exemple connectées, au substrat 801. A titre d'exemple, les diodes D5 et D6 peuvent être des diodes discrètes. Dans ce cas, l'anode de la diode D5 et la cathode de la diode D6 peuvent être connectées au substrat 801 par l'intermédiaire de fils conducteurs et d'une métallisation (non représentée) formée sur la face supérieure ou sur la face inférieure du substrat 801.

Un avantage du générateur 800 de la figure 8 est que chaque cellule de conversion thermoélectrique comporte deux transducteurs capacitifs à électret partageant une même électrode mobile formée par la lamelle bimétallique 407. Ainsi, chaque cellule fonctionne selon un principe identique ou similaire à celui décrit en relation avec la figure 2. Dans cet exemple, le support semiconducteur 401c forme l'électrode fixe du transducteur inférieur, et le substrat 801 forme l'électrode fixe du transducteur supérieur. Ceci permet, pour une quantité donnée d'énergie thermique reçue par la cellule, de récupérer une plus grande quantité d'énergie électrique.

Dans une variante de réalisation, chaque cellule de conversion peut comporter uniquement le transducteur capacitif à électret supérieur formé par la lamelle bimétallique 407, la couche d'électret 803 et le substrat 801. Les diodes D3 et D4, ainsi que les couches 403 et 405, peuvent alors être supprimées.

On notera que les variantes de réalisation des figures 7 et 8 peuvent être combinées, c'est-à-dire que, dans le générateur 800 de la figure 8, la face supérieure du substrat 801, c'est-à-dire la face du substrat 801 opposée aux lamelles 407, peut comporter des ailettes.

Un avantage des modes de réalisation décrits en relation avec les figures 4A à 4C, 6, 7 et 8, est que les générateurs thermoélectriques décrits sont simples, compacts, et qu'ils peuvent être réalisés à grande échelle à des coûts relativement faibles. En outre, ils peuvent avoir des surfaces variées allant par exemple de la taille d'une puce semiconductrice de quelques mm² à quelques cm² à des surfaces de plusieurs centaines de cm², et des épaisseurs relativement faibles, par exemple de quelques millimètres. Ainsi, les générateurs décrits peuvent convertir efficacement de l'énergie thermique en énergie électrique dans des environnements variés.

Des modes de réalisation particuliers ont été décrits. Diverses variantes et modifications apparaîtront à l'homme de l'art.

En particulier, les modes de réalisation décrit ne se limitent pas aux exemples susmentionnés dans lesquels les cellules de conversion du générateur thermoélectrique sont formées dans et sur un substrat SOI. A titre de variante, on pourra réaliser un générateur thermoélectrique du type décrit ci-dessus à partir d'un substrat semiconducteur massif, par exemple en silicium, les diodes D1 et D2 de chaque cellule étant alors formées dans le substrat semiconducteur massif.

Par ailleurs, les modes de réalisation décrits ne se limitent pas aux exemples susmentionnés de circuits de redressement des signaux électriques produits par les éléments de transduction thermoélectrique du générateur. Outre les diodes D1 et D2, chaque cellule de conversion pourra comprendre d'autres composants formés dans et sur une région semiconductrice du substrat. En outre, les diodes D3, D4, D5, D6 susmentionnées sont optionnelles et peuvent éventuellement être remplacées par d'autres composants, complétées par d'autres composants, ou supprimées.

De plus, les modes de réalisation décrits ne se limitent pas à l'exemple de procédé de fabrication d'un générateur thermoélectrique décrit en relation avec les figures 5A à 5F.

## Revendications

1. Dispositif (400 ; 600 ; 700 ;800) de conversion d'énergie thermique en énergie électrique, comportant une pluralité de cellules de conversion (C) disposées dans et sur un premier substrat (401), chaque cellule (C) comprenant :
une lamelle bimétallique incurvée (407) comprenant deux couches superposées de métaux distincts présentant des coefficients de dilatation thermique différents et adaptée à changer de forme lorsque sa température varie ;
des première (D1) et deuxième (D2) diodes couplées à ladite lamelle (407), formées dans une première région semiconductrice (401a) du premier substrat (401) ; et
un premier transducteur capacitif à électret (415) dont une première électrode est formée par ladite lamelle (407)
dans lequel ladite lamelle (407) est située en regard d'une deuxième région semiconductrice (401c ; 801) formant une deuxième électrode du transducteur (415), chaque cellule (C) comportant une couche d'électret (405 ; 803) entre ladite lamelle (407) et la deuxième région semiconductrice (401c).

2. Dispositif (400 ; 600 ; 700 ; 800) selon la revendication 1, dans lequel, dans chaque cellule (C), l'anode de la première diode (D1) et la cathode de la deuxième diode (D2) sont couplées électriquement à la lamelle (407) par au moins une première piste conductrice (409).

3. Dispositif (400 ; 600 ; 700 ; 800) selon la revendication 2, dans lequel ladite au moins une première piste conductrice (409) est réalisée dans au moins un niveau de métal de la lamelle bimétallique (407).

4. Dispositif (400 ; 600 ; 700 ; 800) selon l'une quelconque des revendications 1 à 3, dans lequel les cathodes des premières diodes (D1) sont couplées à un même premier noeud (V₊) du dispositif par au moins une deuxième piste conductrice (411), et les anodes des deuxièmes diodes (D2) sont couplées à un même deuxième noeud (V_) du dispositif par au moins une troisième piste conductrice (413).

5. Dispositif (400 ; 600 ; 700 ; 800) selon la revendication 4, dans lequel lesdites au moins une deuxième (411) et au moins une troisième (413) pistes conductrices sont réalisées dans au moins un niveau de métal de la lamelle bimétallique (407).

6. Dispositif (400 ; 600 ; 700 ; 800) selon l'une quelconque des revendications 1 à 5, dans lequel, dans chaque cellule (C), la deuxième région semiconductrice (401c) située en regard de ladite lamelle (407) et formant une deuxième électrode du transducteur capacitif à électret (415) de la cellule, est une région du premier substrat (401).

7. Dispositif (600 ; 700 ; 800) selon l'une quelconque des revendications 1 à 6, comportant en outre un deuxième substrat (601 ; 701 ; 801) situé du côté des lamelles bimétalliques (407) opposé au premier substrat (401).

8. Dispositif (700) selon la revendication 7, dans lequel le deuxième substrat (701) comporte des ailettes (703) sur une face opposée aux lamelles bimétalliques (407).

9. Dispositif (800) selon la revendication 7 ou 8, dans lequel le deuxième substrat (801) est revêtu d'une couche d'électret (803) du côté d'une face tournée vers les lamelles bimétalliques (407).

10. Dispositif (800) selon la revendication 9, dans lequel chaque cellule comporte un deuxième transducteur capacitif à électret dont une première électrode est formée par ladite lamelle (407) et dont une deuxième électrode est formée par une région semiconductrice du deuxième substrat (801) située en regard de ladite lamelle (407).

11. Dispositif (400 ; 600 ; 700 ; 800) selon l'une quelconque des revendications 1 à 10, dans lequel le premier substrat (401) est un substrat SOI comprenant une couche semiconductrice (401a) revêtant une couche isolante (401b) revêtant un support semiconducteur (401c).

12. Dispositif (400 ; 600 ; 700 ; 800) selon la revendication 11, dans lequel, dans chaque cellule, la lamelle bimétallique incurvée (407) est formée au dessus de la couche isolante (401b) dans une région du substrat (401) dans laquelle la couche semiconductrice (401a) a été retirée.

13. Dispositif selon la revendication 11 ou 12, dans lequel lesdites premières (D1) et deuxièmes (D2) diodes sont formées dans la couche semiconductrice (401a).

14. Procédé de fabrication d'un dispositif (400 ; 600 ; 700 ; 800) de conversion d'énergie thermique en énergie électrique comportant une pluralité de cellules (C) de conversion disposées dans et sur un premier substrat (401), ce procédé comportant les étapes suivantes :
former, dans chaque cellule (C), des première (D1) et deuxième (D2) diodes dans une première région semiconductrice (401a) du premier substrat (401) ;
former, dans chaque cellule (C), une lamelle bimétallique incurvée (407) couplée aux première (D1) et deuxième (D2) diodes de la cellule, ladite lamelle (407) comprenant deux couches superposées de métaux distincts présentant des coefficients de dilatation thermique différents et étant adaptée à changer de forme lorsque sa température varie ; et
former, dans chaque cellule (C), une couche (405 ; 803) d'électret entre ladite lamelle (407) et une deuxième région semiconductrice (401c ; 801), ladite lamelle et ladite deuxième région semiconductrice formant des électrodes d'un transducteur capacitif à électret de la cellule (C).

## Patentansprüche

1. Vorrichtung (400; 600; 700; 800) zum Umwandeln von thermischer Leistung in elektrische Leistung, welche eine Vielzahl von Umwandlungszellen (C) aufweist, die in und auf einem ersten Substrat (401) angeordnet sind, wobei jede Zelle (C) Folgendes aufweist:
einen gekrümmten Bimetallstreifen (407), der zwei übereinanderliegende Schichten von unterschiedlichen Metallen mit unterschiedlichen thermischen Ausdehnungskoeffizienten aufweist und geeignet ist, seine Form zu ändern, wenn die Temperatur variiert;
erste (D1) und zweite (D2) Dioden, die mit dem Streifen (407) verbunden sind, die in einem ersten Halbleiterbereich (401 a) des ersten Substrates (401) angeordnet sind; und
einen ersten kapazitiven Elektretwandler (415), der eine erste Elektrode hat, die durch den Streifen (407) geformt wird,
wobei der Streifen (407) vor einem zweiten Halbleiterbereich (401c; 801) angeordnet ist, der eine zweite Elektrode des Wandlers (415) bildet, wobei jede Zelle (C) eine Elektretschicht (405; 803) zwischen dem Streifen (407) und dem zweiten Halbleiterbereich (401 c) aufweist.

2. Vorrichtung (400; 600; 700; 800) nach Anspruch 1, wobei in jeder Zelle (C) die Anode der ersten Diode (D1) und die Kathode der zweiten Diode (D2) elektrisch mit dem Streifen (407) durch mindestens eine erste Leiterbahn (409) verbunden sind.

3. Vorrichtung (400; 600; 700; 800) nach Anspruch 2, wobei die mindestens eine erste Leiterbahn (409) in mindestens einem Metallniveau des Bimetallstreifens (407) ausgeformt ist.

4. Vorrichtung (400; 600; 700; 800) nach einem der Ansprüche 1 bis 3, wobei die Kathoden der ersten Dioden (D1) mit einem gleichen ersten Knoten (V₊) der Vorrichtung durch mindestens eine zweite Leiterbahn (411) verbunden sind, und wobei die Anoden der zweiten Dioden (D2) mit dem gleichen zweiten Knoten (V₋) der Vorrichtung durch mindestens eine dritte Leiterbahn (413) verbunden sind.

5. Vorrichtung (400; 600; 700; 800) nach Anspruch 4, wobei die mindestens eine zweite (411) und die mindestens eine dritte (413) Leiterbahn in mindestens einem Metallniveau des Bimetallstreifens (407) geformt sind.

6. Vorrichtung (400; 600; 700; 800) nach einem der Ansprüche 1 bis 5, wobei in jeder Zelle (C) der zweite Halbleiterbereich (401 c), der vor dem Streifen (407) ist und eine zweite Elektrode des kapazitiven Elektretwandlers (415) bildet, ein Bereich des ersten Substrates (401) ist.

7. Vorrichtung (600; 700; 800) nach einem der Ansprüche 1 bis 6, die weiter ein zweites Substrat (601; 701; 801) aufweist, welches an der Seite der Bimetallstreifen (407) gegenüberliegend zum ersten Substrat (401) angeordnet ist.

8. Vorrichtung (700) nach Anspruch 7, wobei das zweite Substrat (701) Finnen (703) an einer Oberfläche entgegengesetzt zu den Bimetallstreifen (407) aufweist.

9. Vorrichtung (800) nach Anspruch 7 oder 8, wobei das zweite Substrat (801) mit einer Elektretschicht (803) an der Seite einer Oberfläche beschichtet ist, die zu den Bimetallstreifen (407) weist.

10. Vorrichtung (800) nach Anspruch 9, wobei jede Zelle einen zweiten kapazitiven Elektretwandler aufweist, der eine erste Elektrode hat, die von dem Streifen (407) gebildet wird, und eine zweite Elektrode hat, die durch einen Halbleiterbereich des zweiten Substrates (801) gebildet wird, der vor dem Streifen (407) angeordnet ist.

11. Vorrichtung (400; 600; 700; 800) nach einem der Ansprüche 1 bis 10, wobei das erste Substrat (401) ein SOI-Substrat ist, welches eine Halbleiterschicht (401 a) aufweist, die eine Isolierschicht (401 b) bedeckt, die einen Halbleiterträger (401 c) bedeckt.

12. Vorrichtung (400; 600; 700; 800) nach Anspruch 11, wobei für jede Zelle der gekrümmte Bimetallstreifen (407) über der isolierenden Schicht (401 b) in einem Bereich des Substrates (401) gebildet ist, indem die Halbleiterschicht (401 a) entfernt worden ist.

13. Vorrichtung nach Anspruch 11 oder 12, wobei die ersten (D1) und die zweiten (D2) Dioden in der Halbleiterschicht (401 a) gebildet sind.

14. Verfahren zur Herstellung einer Vorrichtung (400; 600; 700; 800) zur Umwandlung von thermischer Leistung in elektrische Leistung, welche eine Vielzahl von Umwandlungszellen (C) aufweist, die in und auf einem ersten Substrat (401) angeordnet sind, wobei das Verfahren folgende Schritte aufweist:
Formen einer ersten Diode (D1) und einer zweiten Diode (D2) in einem ersten Halbleiterbereich (401 a) des ersten Substrates (401) in jeder Zelle (C);
Formen eines gekrümmten Bimetallstreifens (407) in jeder Zelle (C), der mit den ersten (D1) und zweiten (D2) Dioden der Zelle verbunden ist, wobei der Streifen (407) zwei übereinander geordnete Schichten von unterschiedlichen Metallen mit unterschiedlichen thermischen Ausdehnungskoeffizienten aufweist und geeignet ist, seine Form zu verändern, wenn die Temperatur variiert; und
Formen einer Elektretschicht (405; 803) in jeder Zelle (C) zwischen dem Streifen (407) und einem zweiten Halbleiterbereich (401c; 801) wobei der Streifen und der zweite Halbleiterbereich Elektroden eines kapazitiven Elektretwandlers der Zelle (C) bilden.

## Claims

1. A device (400; 600; 700; 800) for converting thermal power into electric power, comprising a plurality of conversion cells (C) arranged inside and on top of a first substrate (401), each cell (C) comprising:
a curved bimetal strip (407) comprising two superposed layers of distinct metals having different thermal expansion coefficients and adapted to change its shape when the temperature varies;
first (D1) and second (D2) diodes coupled to said strip (407), arranged in a first semiconductor region (401a) of the first substrate (401); and
a first capacitive electret transducer (415) having a first electrode formed by said strip (407),
wherein said strip (407) is located in front of a second semiconductor region (401c; 801) forming a second electrode of the transducer (415), each cell (C) comprising an electret layer (405; 803) between said strip (407) and the second semiconductor region (401c).

2. The device (400; 600; 700; 800) of claim 1, wherein, in each cell (C), the anode of the first diode (D1) and the cathode of the second diode (D2) are electrically coupled to the strip (407) by at least one first conductive track (409).

3. The device (400; 600; 700; 800) of claim 2, wherein said at least one first conductive track (409) is formed in at least one metal level of the bimetal strip (407).

4. The device (400; 600; 700; 800) of any of claims 1 to 3, wherein the cathodes of the first diodes (D1) are coupled to a same first node (V₊) of the device by at least one second conductive track (411), and the anodes of the second diodes (D2) are coupled to a same second node (V-) of the device by at least one third conductive track (413).

5. The device (400; 600; 700; 800) of claim 4, wherein said at least one second (411) and at least one third (413) conductive tracks are formed in at least one metal level of the bimetal strip (407).

6. The device (400; 600; 700; 800) of any of claims 1 to 5, wherein, in each cell (C), the second semiconductor region (401c) located in front of the strip (407) and forming a second electrode of the capacitive electret transducer (415) of the cell is a region of the first substrate (401).

7. The device (600; 700; 800) of any of claims 1 to 6, further comprising a second substrate (601; 701; 801) located on the side of the bimetal strips (407) opposite to the first substrate (401).

8. The device (700) of claim 7, wherein the second substrate (701) comprises fins (703) on a surface opposite to the bimetal strips (407).

9. The device (800) of claim 7 or 8, wherein the second substrate (801) is coated with an electret layer (803) on the side of a surface facing the bimetal strips (407).

10. The device (800) of claim 9, wherein each cell comprises a second capacitive electret transducer having a first electrode formed by said strip (407) and having a second electrode formed by a semiconductor region of the second substrate (801) located in front of said strip (407).

11. The device (400; 600; 700; 800) of any of claims 1 to 10, wherein the first substrate (401) is an SOI substrate comprising a semiconductor layer (401a) coating an insulating layer (401b) coating a semiconductor support (401c).

12. The device (400; 600; 700; 800) of claim 11, wherein, for each cell, the curved bimetal strip (407) is formed above the insulating layer (401b) in a region of the substrate (401) from which the semiconductor layer (401a) has been removed.

13. The device of claim 11 or 12, wherein said first (D1) and second (D2) diodes are formed in the semiconductor layer (401a).

14. A method of manufacturing a device (400; 600; 700; 800) for converting thermal power into electric power, comprising a plurality of conversion cells (C) arranged inside and on top of a first substrate (401), the method comprising the steps of:
forming, in each cell (C), first (D1) and second (D2) diodes in a first semiconductor region (401a) of the first substrate (401);
forming, in each cell (C), a curved bimetal strip (407) coupled to the first (D1) and second (D2) diodes of the cell, said strip (407) comprising two superposed layers of distinct metals having different thermal expansion coefficients and adapted to change its shape when the temperature varies; and
forming, in each cell (C), an electret layer (405; 803) between said strip (407) and a second semiconductor region (401c; 801), the strip and the second semiconductor region forming electrodes of a capacitive electret transducer of the cell (C).
